(19) Europäisches Patentamt
European Patent Office
Office européen des brevets

(11) EP 2 535 974 B1

(12) **EUROPEAN PATENT SPECIFICATION**

(45) Date of publication and mention of the grant of the patent:
**26.10.2016 Bulletin 2016/43**

(21) Application number: **11739919.6**

(22) Date of filing: **08.02.2011**

(51) Int Cl.:
***H01M 4/587*** *(2010.01)* ***H01M 4/62*** *(2006.01)*
***H01M 10/0525*** *(2010.01)* ***H01M 10/0567*** *(2010.01)*

(86) International application number:
**PCT/JP2011/052615**

(87) International publication number:
**WO 2011/096572 (11.08.2011 Gazette 2011/32)**

(54) **NONAQUEOUS ELECTROLYTE SECONDARY BATTERY**

SEKUNDÄRBATTERIE MIT NICHTWÄSSRIGEM ELEKTROLYTEN

BATTERIE SECONDAIRE À ÉLECTROLYTE NON-AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2010 JP 2010024945**

(43) Date of publication of application:
**19.12.2012 Bulletin 2012/51**

(73) Proprietor: **NEC Energy Devices, Ltd.**
**Chuo-ku**
**Sagamihara-shi**
**Kanagawa 252-5298 (JP)**

(72) Inventors:
- **WAKI, Ippei**
**Sagamihara-shi**
**Kanagawa 252-5298 (JP)**
- **SASAKI, Hideaki**
**Tokyo 108-8001 (JP)**
- **NOGUCHI, Takehiro**
**Tokyo 108-8001 (JP)**
- **KONO, Yasutaka**
**Sagamihara-shi**
**Kanagawa 252-5298 (JP)**
- **ISHIKAWA, Hitoshi**
**Sagamihara-shi**
**Kanagawa 252-5298 (JP)**

(74) Representative: **Vossius & Partner**
**Patentanwälte Rechtsanwälte mbB**
**Siebertstrasse 3**
**81675 München (DE)**

(56) References cited:
**EP-A1- 1 394 888** **JP-A- 4 255 670**
**JP-A- 11 111 300** **JP-A- 2008 071 559**
**JP-A- 2008 153 118** **JP-A- 2009 038 018**
**KR-A- 20080 018 732** **US-A1- 2006 166 096**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 535 974 B1

## Description

Technical Field

The present invention relates to a nonaqueous electrolyte secondary battery.

Background Art

Recently, size and weight reductions and diversification of consumer-use mobile phones, portable electronic equipment, portable information terminals and the like have rapidly proceeded. With this tendency, as a battery serving as a power source for them, it has been strongly desired to develop a compact and lightweight secondary battery having a high energy density and further capable of realizing charge and discharge repeatedly for a long time. Of them, as a secondary battery satisfying these desires as compared to lead battery and nickelcadmium battery using an aqueous electrolytic solution, batteries such as a nonaqueous electrolytic lithium secondary battery have been put into practical use and aggressively studied.

Such a lithium secondary battery is made of, for example, a positive electrode plate including a collector, which holds a positive electrode active material absorbing and desorbing a lithium ion; a negative electrode plate including a collector, which holds a negative electrode active material absorbing and desorbing a lithium ion; an electrolytic solution including a lithium salt such as $LiBF_4$ and $LiPF_6$ dissolved in an aprotic organic solvent; and a separator preventing short circuit and interposed between the positive electrode plate and the negative electrode plate.

As an electrolytic solution of a lithium secondary battery, generally a solvent mixture containing a high dielectric solvent, such as ethylene carbonate and propylene carbonate, and a low viscosity solvent, such as dimethyl carbonate and diethyl carbonate, is used. In the solvent mixture, a supporting electrolyte such as $LiBF_4$ and $LiPF_6$ is dissolved.

As the positive electrode active material of the lithium secondary battery, titanium disulfide, vanadium pentoxide and various compounds represented by the general formulas of $Li_xMO_2$, $Li_xM_2O_4$, $Li_xMPO_4$ and $Li_xMSiO_4$ (note that M includes at least one transition metal) have been studied. Of them, e.g., lithium cobalt complex oxide, lithium nickel complex oxide and lithium manganese complex oxide can perform charge and discharge at an extremely noble potential of 4 V (vs. $Li/Li^+$) or more. Therefore, if such a material is used as a positive electrode active material, a lithium secondary battery having a high discharge voltage can be realized.

As the negative electrode active material of the lithium secondary battery, there has been studied materials including a lithium-containing alloy capable of absorbing and desorbing lithium ions. Of them, when the carbon material is used, it has the advantage that a long cycle-life and highly safe lithium secondary battery can be obtained and now the carbon material is put into practical use.

Such a lithium secondary battery has recently been frequently employed in electronic equipment used under an environment of not only a normal temperature but also a wide temperature region. For example, regarding a notebook-size personal computer, the temperature within the personal computer increases with high speed operation of a central processing unit. Accordingly, a battery has been used under a high temperature environment for a long time. Also, mobile phones and portable instruments have been frequently used under a high temperature environment. In the circumstances, an improvement in the cycle life of a lithium secondary battery repeatedly used under a high temperature environment has been strongly desired.

Patent Literature 1 (JP3978881B) discloses a lithium secondary battery in which a positive electrode is made of a material containing a lithium complex oxide and a negative electrode is made of a material containing graphite. The nonaqueous solvent of the lithium secondary battery contains a cyclic carbonate and a linear carbonate selected from the group consisting of ethylene carbonate and propylene carbonate, as a main component and contains 0.1 mass% or more and 4 mass% or less of 1,3-propane sultone and/or 1,4-butane sultone. The literature states that the lithium secondary battery provides excellent battery cycle characteristics and further provides excellent battery characteristics such as storage characteristics in a charge state.

Patent Literature 2 (JP3059832B) discloses a lithium secondary battery in which graphite is used as a negative electrode material, and a solvent mixture of vinylene carbonate or a derivative thereof and a low-boiling point solvent having a boiling point of 150°C or less is used as an electrolyte solvent. The literature states that the lithium secondary battery can suppress decomposition gas generated from the reaction between an electrolytic solution and a carbon material and a decrease in battery capacity due to this.

Patent Literature 3 (JP3815087B) discloses a nonaqueous electrolytic solution containing a disulfonic acid ester derivative in an amount of 0.1 to 10 mass% based on the weight of the electrolytic solution. The literature states that by using the nonaqueous electrolytic solution, an active and highly crystallized carbon material such as natural graphite and artificial graphite is coated with a passive film to suppress decomposition of the electrolytic solution, with the result that normal charge and discharge can be repeated without damaging reversibility of the battery.

Patent Literature 4 (JP4229615B) discloses a nonaqueous electrolytic solution in which a lithium salt is dissolved

in a nonaqueous organic solvent; the nonaqueous organic solvent contains a compound selected from the group consisting of benzene, toluene, ethylbenzene, diethylbenzene, triethylbenzene, isopropylbenzene, t-butylbenzene, cyclohexylbenzene, biphenyl, 2-phenyl toluene, 3-phenyl toluene, 4-phenyl toluene, 3,3'-dimethylbiphenyl, 4,4'-dimethylbiphenyl, naphthalene, 1-phenylnaphthalene, o-terphenyl, m-terphenyl, p-terphenyl, an o-terphenyl partial hydride as an aromatic hydrocarbon, an m-terphenyl partial hydride as an aromatic hydrocarbon, a p-terphenyl partial hydride as an aromatic hydrocarbon, diphenylmethane, anisole, ethyl phenyl ether, 1,2'-dimethoxybenzene, 1,3'-dimethoxybenzene, 1,4'-dimethoxybenzene, 2-methoxybiphenyl, 4-methoxybiphenyl, diphenyl ether, 3-phenoxytoluene and 1,3-diphenoxybenzene in an amount of 10 mass% or less based on the nonaqueous electrolytic solution; and a bis organic sulfonate compound is contained in an amount of 0.1 to 10 mass% based on the nonaqueous electrolytic solution. The literature states that by using the nonaqueous electrolytic solution, two sulfonate groups interact with a positive electrode made of Co, Ni etc. to form a strong sulfonate adsorption layer, resulting in improving storage characteristics.

Patent Literature 5 (JP2548460B) discloses a negative electrode for a nonaqueous electrolyte secondary battery, in which, as a negative electrode binder, at least one type selected from a styrene-ethylene-butylene-styrene copolymer, a styrene-butadiene rubber, a methyl methacrylate-butadiene rubber, an acrylonitrile-butadiene rubber and a butadiene rubber is used. The literature states that by using the negative electrode for a nonaqueous electrolyte secondary battery, a reduction in size of the electrode is prevented and conductivity within the negative electrode is sufficiently maintained even when charge and discharge are repeated. The literature also states that a charge and discharge capacity does not decrease with a relatively small number of charge and discharge cycles, resulting in having stable battery characteristics.

US 2006/166096 (A1) relates to a nonaqueous electrolyte secondary battery and particularly to a nonaqueous electrolyte secondary battery using a graphite material as the negative active material and lithium cobalt oxide as the positive active material. KR 2008 0018732 (A) discloses a non-aqueous electrolyte battery having improved water resistance to inhibit a propane sultone compound added to the electrolyte from reacting with moisture present in the battery, thereby improving the quality of the battery. JP 2009 038018 (A) provides a battery capable of improving the cycle characteristics even if the thickness of the anode active material layer is increased. JP 11 111300 (A) relates to restrain swelling of a negative electrode, and improve binding power of mutual negative electrode active materials and the active material and a current collector by using a butadiene containing rubber binding agent on which tensile strength and rupture elongation are respectively not less than a specific value.Summary of Invention

Technical Problem To Be Solved By Invention

However, the lithium secondary battery of Patent Literature 1 had a problem in that if 1,3-propane sultone or 1,4-butane sultone is used, a film having a high electric resistant is formed on the interface between the negative electrode binder and the electrolytic solution. Particularly, under a high temperature environment, the resistance of the electrode increases, resulting in decreasing the capacity.

The lithium secondary battery of Patent Literature 2 had a problem in that since a film is formed on the interface between the negative electrode active material and the binder, tight adhesion of vinylene carbonate to the electrode reduces, with the result that inactivation of the active material occurs and the capacity of the battery decreases.

The nonaqueous electrolytic solution of Patent Literature 3 had a problem in that when the negative electrode active material is in contact with the electrolytic solution via the binder, a film is formed on the interface between the binder and the negative electrode active material, with the result that the binder no longer maintains binding ability and the capacity of the battery decreases.

The nonaqueous electrolytic solution of Patent Literature 4 had a problem in that when a charge and discharge cycle is repeated, a passive layer low in electric conductivity is further formed on the sulfonate adsorption layer, with the result that transfer of lithium ions is inhibited and the capacity of the battery decreases.

The negative electrode for a nonaqueous electrolyte secondary battery of Patent Literature 5 had a problem in that since the binder is hard to be impregnated with the electrolytic solution, transfer of lithium ions is inhibited, with the result that resistance increases and the capacity of the battery decreases. Furthremore, it had a problem in that the binder elutes into the electrolytic solution under a high temperature environment, reduces in amount in the electrode, with the result that expansion of the electrode caused by charge and discharge cannot be suppressed and the resistance of the electrode increases, thereby decreasing the capacity of the battery.

As described above, in the lithium secondary battery, stability against the reaction between an electrode active material and an electrolytic solution is insufficient. As a result, tight adhesion of an electrode cannot be sufficiently maintained and transfer of lithium ions is inhibited. For the reason, if charge and discharge are repeated under a high temperature environment for a long time, there has been a problem in that the capacity retention rate decreases.

A problem of the present invention is to provide a nonaqueous electrolyte secondary battery showing a sufficient capacity retention rate even if a charge and discharge cycle is repeated under a high temperature environment for a long time.

Means For Solving Problem

An exemplary embodiment relates to a nonaqueous electrolyte secondary battery comprising
a positive electrode capable of absorbing and desorbing a lithium ion;
a negative electrode comprising a negative electrode active material layer containing at least a styrene polymer as a binder and capable of absorbing and desorbing the lithium ion, the content of the styrene polymer being 0.3 to 8.0 mass% based on a total mass of the negative electrode active material layer;
a nonaqueous electrolytic solution containing at least a cyclic sulfonic acid ester including two sulfonyl groups in an amount of 0.002 to 5.0 mass% based on a total mass of the nonaqueous electrolytic solution; and
a separator provided between the positive electrode and the negative electrode.

Advantageous Effects of Invention

Since a styrene polymer serving as a binder for a negative electrode is hard to be impregnated with an electrolytic solution, contact between a negative electrode active material and an electrolytic solution via the binder is prevented, with the result that a side reaction between the negative electrode active material and the electrolytic solution can be prevented. Furthermore, since the electrolytic solution contains at least a cyclic sulfonic acid ester including two sulfonyl groups, a stable surface film is formed on the surface of the negative electrode active material, with the result that decomposition of an electrolyte solvent under a high temperature environment can be prevented.
In addition, a styrene polymer serving as a binder of the negative electrode is contained in an amount of 0.3 to 8.0 mass% in the negative electrode active material layer and a cyclic sulfonic acid ester is contained in an amount of 0.002 to 5.0 mass% in the electrolytic solution. By virtue of this, a stable and highly ion conductive film is formed on the interface between the binder and the electrolytic solution. Accordingly, when lithium ions transfer in the negative electrode, they pass through not the binder layer, which is hard to be impregnated with the electrolytic solution and makes it difficult to transfer the lithium ions, but the film which easily transfers lithium ions. Consequently, smooth transfer of lithium ions in the electrode and suppression of the reaction between the negative electrode active material and the electrolytic solution can be simultaneously attained. Furthermore, since the film is formed, elution of the binder into the electrolytic solution is suppressed even under a high temperature environment. Since the adhesiveness of the electrode is maintained, expansion of the electrode is suppressed and an increase of resistance can be prevented. As a result, even if a charge and discharge cycle is repeated under a high temperature environment for a long time, a high capacity retention rate can be obtained.

Brief Description of Drawing

Figure 1 is a schematic view showing a structure of a lithium secondary battery manufactured in each of Examples and Comparative Examples.

Description of Embodiments

A nonaqueous electrolyte secondary battery comprises positive and negative electrodes capable of absorbing and desorbing lithium ions, a nonaqueous electrolytic solution and a separator. The negative electrode comprises a negative electrode active material layer capable of absorbing and desorbing lithium ions and a collector. The positive electrode comprises a positive electrode active material capable of absorbing and desorbing lithium ions and a collector.
As the binder of the negative electrode, at least a styrene polymer is contained in an amount of 0.3 to 8.0 mass% based on the total mass of the negative electrode active material layer. In the electrolytic solution, at least a cyclic sulfonic acid ester including two sulfonyl groups is contained in an amount of 0.002 to 5.0 mass% based on the total mass of the electrolytic solution.
Since the styrene polymer is hard to be impregnated with an electrolytic solution, contact between the negative electrode active material and the electrolytic solution via the binder is prevented, with the result that the side reaction between the negative electrode active material and the electrolytic solution can be prevented. Furthermore, since the electrolytic solution includes a cyclic sulfonic acid ester, a stable surface film is formed on the surface of the negative electrode active material, with the result that decomposition of an electrolyte solvent under a high temperature environment can be prevented.
Furthermore, since a styrene polymer and a cyclic sulfonic acid ester are respectively contained in the negative electrode and the nonaqueous electrolytic solution within specific ranges of amounts, a highly electric conductive film is formed on the interface between the negative electrode binder and the electrolytic solution. Accordingly, when lithium ions transfer in the negative electrode, lithium ions can be smoothly transferred not via the binder layer, which is hard to be impregnated with the electrolytic solution and makes it difficult to transfer lithium ions but via the film. Because of

this, smooth transfer of lithium ions in the electrode and suppression of the reaction between the negative electrode active material and the electrolytic solution can be simultaneously attained. Furthermore, since the film is formed, elution of a binder into an electrolytic solution is suppressed even under a high temperature environment. Since the adhesiveness of the electrode is maintained, expansion of the electrode is suppressed and an increase of resistance can be prevented. As a result, even if a charge and discharge cycle is repeated under a high temperature environment for a long time, a high capacity retention rate can be obtained.

Individual members and materials forming the nonaqueous electrolyte secondary battery will be described in more detail below.

(Negative electrode)

The "styrene polymer" serving as a binder contained in the negative electrode refers to a polymer of styrene monomers or a copolymer of a styrene monomer and a monomer copolymerizable with the styrene monomer.

Examples of the styrene monomer according to the present invention include styrene, $\alpha$-methylstyrene, dimethylstyrene and vinyl toluene. Of them, styrene is preferable.

Examples of the monomer copolymerizable with a styrene monomer include
vinyl monomers such as acrylonitrile, methacrylonitrile, umaronitrile;
a methacrylic acid monomer made of methacrylic acid;
methacrylate ester monomers such as methyl methacrylate, ethyl methacrylate, propyl methacrylate, butyl methacrylate, 2-ethylhexyl methacrylate, phenyl methacrylate, benzyl methacrylate, and isobornyl methacrylate;
butadiene monomers such as butadiene, isoprene and chloroprene;
an acrylic acid monomer made of acrylic acid;
acrylate ester monomers such as methyl acrylate, ethyl acrylate, propyl acrylate, butyl acrylate, 2-ethylhexyl acrylate and cyclohexyl acrylate;
monomers of unsaturated dicarboxylic acid anhydrides such as maleic anhydride, itaconic anhydride and citraconic anhydride; and
monomers of imide compounds of unsaturated dicarboxylic acids such as maleimide, N-methylmaleimide, N-butylmaleimide, N-phenylmaleimide and N-cyclohexylmaleimide. These monomers can be used singly or in combinations of two or more.

As the styrene polymer, at least, a copolymer containing a styrene monomer and a butadiene monomer or a copolymer containing a styrene monomer and an acrylic acid monomer is preferable. Furthermore, the copolymers may further contain a monomer other than these monomers. By using the binders mentioned above, a film having a further higher electric conductivity is formed on the interface between the binder and the electrolytic solution in the negative electrode and thus lithium ions can be more smoothly transferred for a long time.

As the copolymer containing a styrene monomer and a butadiene monomer, a styrene-butadiene copolymer; and copolymers including another monomer added to a part of a styrene-butadiene copolymer such as a styrene-ethylene-butadiene copolymer, a methyl methacrylate-styrene-butadiene copolymer, a methyl methacrylate-styrene-butadiene copolymer and an acrylonitrile-styrene-butadiene copolymer may be used. As the copolymer containing a styrene monomer and an acrylic acid monomer, a styrene-acryl copolymer and an acryl-styrene-acrylonitrile copolymer may be used.

By using the styrene polymers mentioned above as the binder, elution of the binder into the electrolytic solution under a high temperature environment can be more securely suppressed and thus the adhesiveness of the electrode can be more securely maintained.

In the styrene polymer mentioned above, the content range of a styrene monomer in a styrene polymer is preferably 5 to 80 mass%, more preferably, 15 to 70 mass%, and further preferably, 25 to 60 mass%. Within these ranges, the resistance of the film formed on the interface between the binder and the electrolytic solution can be more decreased while maintaining the adhesiveness of the electrode.

The binder of a styrene polymer used in the negative electrode needs to be contained in an amount of 0.3 to 8.0 mass% in the negative electrode active material layer; however, the binder may be contained within the range of preferably 0.5 to 6.0 mass%, more preferably 0.8 to 5.0 mass% and further preferably 1.0 to 3.5 mass%. If the content of a styrene polymer in the negative electrode active material layer is less than 0.3 mass%, adhesiveness of the electrode cannot be sufficiently obtained. If the content is larger than 8.0 mass%, the resistance increasing effect of the binder rarely impregnated with the electrolytic solution becomes larger than the resistance decreasing effect of the film formed on the interface between the binder and the electrolytic solution, with the result that the battery capacity cannot be sufficiently obtained.

As the negative electrode active material, the following materials can be used singly or as a mixture of two or more types.

Cokes, glass state carbons, graphite, hard-graphitized carbons, pyrolytic carbons, carbon fibers;

an active material mainly containing Al, Si, Pb, Sn, Zn, Cd, Sb, etc. or alloys of these and lithium;
metal oxides such as $LiFe_2O_3$, $WO_2$, $MoO_2$, SiO, $SiO_2$, CuO, SnO, $SnO_2$, $Nb_3O_5$, $Li_xTi_{2-x}O_4$ ($0 \leq x \leq 1$), $PbO_2$ and $PbO_5$;
metal sulfides such as SnS and $FeS_2$; and
metal lithium, lithium alloy, polyacene, polythiophene, and
lithium nitride such as $Li_5(Li_3N)$, $Li_7MnN_4$, $Li_3FeN_2$, $Li_{2.5}Co_{0.5}N$, $Li_3CoN$ and complexes carbon with these.

By using a carbonaceous material, in particular, a graphite material, as a negative electrode active material, the interface resistance of the film formed on the surface of the negative electrode active material and the film formed on the interface between the binder and the electrolytic solution can be reduced to more smoothly transfer lithium ions. The surface of the graphite material may be coated with carbon having lower crystallinity than a core material.

(Nonaqueous electrolytic solution)

The nonaqueous electrolytic solution contains at least a cyclic sulfonic acid ester including two sulfonyl groups. The cyclic sulfonic acid ester needs to be contained in an amount of 0.002 to 5.0 mass% in the nonaqueous electrolytic solution; however, the cyclic sulfonic acid ester is preferably contained within the range of 0.004 to 4.6 mass%, more preferably, 0.1 to 4.2 mass% and further preferably, 1 to 3.6 mass%. If the content of a cyclic sulfonic acid ester is less than 0.002 mass%, a film is not sufficiently formed on the interface between the binder and the electrolytic solution. Furthermore, if the content of a cyclic sulfonic acid ester is larger than 5 mass%, the film on the interface between the binder and the electrolytic solution becomes thick, and thus solvation and desolvation of lithium ions do not smoothly proceed. As a result, the resistance of the battery increases and the characteristics thereof decrease.

As the cyclic sulfonic acid ester to be added to the nonaqueous electrolytic solution, a compound represented by the following formula (1) is contained, and thus a more stable surface film is formed on the surface of the binder/electrolytic solution.

[Formula 1]

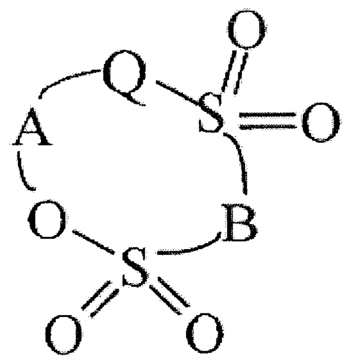

(1)

wherein in the formula (1), Q represents an oxygen atom, a methylene group or a single bond; A represents an alkylene group having 1 to 5 carbon atoms, a carbonyl group, a sulfinyl group, a fluoroalkylene group having 1 to 6 carbon atoms, or a divalent group having 2 to 6 carbon atoms to which an alkylene unit or a fluoroalkylene unit is bonded via an ether bond; and B is an alkylene group, a difluoroalkylene group or an oxygen atom.

Examples of the cyclic sulfonic acid ester include, but not limited to, organic compounds, compound Nos. 1 to 22 shown in the following Table 1. These examples of compounds are shown in JP4033074B. The compounds shown in Table 1 can be obtained by the manufacturing methods described, for example, in the specifications of U.S. Patent No. 4950768, JP5-4496B, West German Patent No. 2509738, and West German Patent No. 2233859.

[Table 1]

Table 1

| Compound No. | Chemical structure | Compound No. | Chemical structure | Compound No. | Chemical structure | Compound No. | Chemical structure |
|---|---|---|---|---|---|---|---|
| 1 | 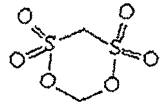 | 8 | 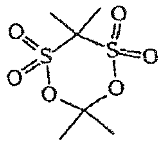 | 15 | 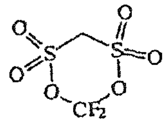 | 22 | 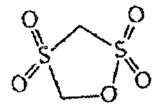 |
| 2 | 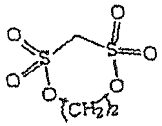 | 9 | 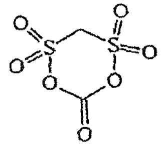 | 16 | 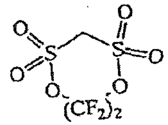 | | |
| 3 | 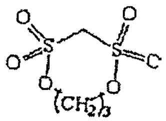 | 10 | 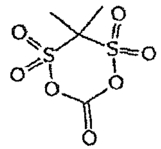 | 17 | 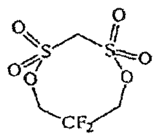 | | |
| 4 | 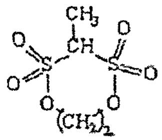 | 11 | 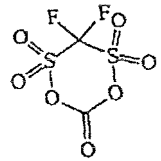 | 18 | 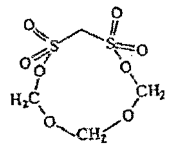 | | |
| 5 | 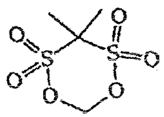 | 12 | 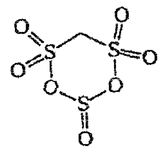 | 19 | 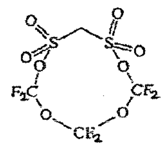 | | |
| 6 | 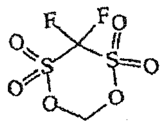 | 13 | 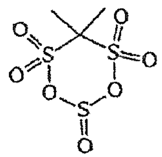 | 20 | 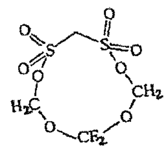 | | |

(continued)

| Compound No. | Chemical structure | Compound No. | Chemical structure | Compound No. | Chemical structure | Compound No. | Chemical structure |
|---|---|---|---|---|---|---|---|
| 7 | 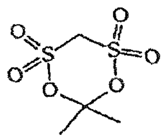 | 14 | 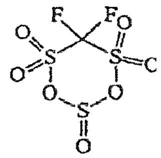 | 21 | 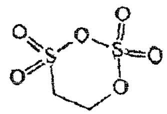 | | |

Examples of the nonaqueous solvent to be used in a nonaqueous electrolytic solution include ethylene carbonate, propylene carbonate, butylene carbonate, vinylene carbonate, trifluoropropylene carbonate, γ-butyrolactone, 2-methyl-γ-butyrolactone, acetyl-γ-butyrolactone, γ-valerolactone, sulfolane, 1,2-dimethoxyethane, 1,2-diethoxyethane, tetrahydrofuran, 2-methyltetrahydrofuran, dimethyl tetrahydrofuran, 3-methyl-1,3-dioxolane, methyl acetate, ethyl acetate, methyl propionate, ethyl propionate, dimethyl carbonate, diethyl carbonate, ethylmethyl carbonate, dipropyl carbonate, methylpropyl carbonate, ethylisopropyl carbonate, dibutyl carbonate, dimethyl formamide, dimethyl acetamide, methyl acetate and acetonitrile. They may be used singly or as a mixture of two or more types. In particular, in view of stability against oxidation and reduction, a mixture of a cyclic carbonate and a chain-form carbonate is preferable.

The electrolyte to be used in a nonaqueous electrolytic solution is used by dissolving it in the above-mentioned nonaqueous solvent as a supporting salt. Examples of the supporting salt include lithium salts such as $LiClO_4$, $LiAsF_6$, $LiPF_6$, $LiBF_4$, $LiCF_3SO_3$, $LiCF_3CF_2SO_3$, $LiCF_3CF_2CF_2SO_3$, $LiN(CF_3SO_2)_2$, $LiN(C_2F_5SO_2)_2$, $LiPF_3(CF_3)_3$, $LiCF_3CO_2$, LiCl, LiBr and LiSCN. They can be used singly or a mixture of two or more types. Of them, $LiPF_6$ is preferably used as a supporting salt.

In place of the electrolyte and the solvent as mentioned above, an ion-conductive polymer electrolyte and an organic electrolytic solution can be used in combination. Specific examples of the ion-conductive polymer electrolyte include polyethers such as polyethylene oxide and polypropylene oxide; polyolefins such as polyethylene and polypropylene; polyvinylidene fluoride, polytetrafluoroethylene, polyvinyl fluoride, polyvinyl chloride, polyvinylidene chloride, polymethyl methacrylate, polymethyl acrylate, polyvinyl alcohol, polymethacrylonitrile, polyvinyl acetate, polyvinyl pyrrolidone, polycarbonate, polyethylene terephthalate, polyhexamethylene adipamide, polycaprolactam, polyurethane, polyethylene imine, polybutadiene, polystyrene, polyisoprene and derivatives of these. They can be used singly or as a mixture.

(Positive electrode)

Examples of the positive electrode active material include lithium-containing complex oxides such as $LiCoO_2$, $LiNiO_2$, $LiMn_2O_4$, $LiNi_{1/3}Co_{1/3}Mn_{1/3}O_2$, $LiNi_{0.5}Mn_{1.5}O_4$, $LiFePO_4$, $LiMnPO_4$ and $Li_2MnO_3$. These lithium-containing complex oxides whose transition metal moiety is replaced with other elements may be used, or mixtures of these may be used.

Polymers containing various types of monomers constituting the aforementioned polymers may be used. Furthermore, other than the polymer electrolytes, an inorganic solid electrolyte or a mixed material of an organic polymer electrolyte and an inorganic solid electrolyte or an inorganic solid powder bound by an organic binder can be used.

(Lithium secondary battery)

The lithium secondary battery is formed of a positive electrode, a negative electrode, a separator and a nonaqueous electrolytic solution in combination. As the separator, fabric cloth, unwoven cloth, porous polymer films such as a polyolefin film made of e.g., polyethylene and polypropylene, a polyimide film and a porous polyvinylidene fluoride, and ion-conductive polymer electrolyte film can be used singly or in combination.

The battery can be formed into various shapes such as a cylindrical, square, coin, button and laminate shapes, as shape of the battery. As the material for a battery case, stainless steel, nickel-plated iron, aluminium, titanium or alloys of these and plated products of these can be used. As a material for the laminate resin film, aluminium, an aluminium alloy, titanium foil and the like can be used. A material for heat welding portion of a metal laminate resin film may be any material as long as it is a thermoplastic polymer material such as polyethylene, polypropylene and polyethylene terephthalate. Furthermore, the metal laminate resin layer and metal foil layer each are not limited to a single layer and may have two or more layers. Examples

Now, specific Examples to which the present invention is applied will be described; however, the present invention is not limited to the following Examples and can be carried out by appropriately modifying them within a range not exceeding the subject matter of the invention.

(Examples 1 to 20)

Figure 1 is a schematic view showing a structure of a lithium secondary battery manufactured in Examples. As shown in Figure 1, on a positive electrode collector 11 made of a meal such as aluminium foil, a positive electrode active material layer 12 capable of absorbing and desorbing lithium ions is provided. On a negative electrode collector 13 made of a metal such as copper foil, a negative electrode active material layer 14 absorbing and desorbing lithium ions is provided. Then, via an electrolytic solution 15 and a separator 16 made of unwoven cloth, fine porous polyolefin film and the like containing the electrolytic solution, the positive electrode collector 11 and the positive electrode active material layer 12, and the negative electrode collector 13 and the negative electrode active material layer 14 are arranged so as to face each other.

The negative electrode was manufactured as follows. As the negative electrode active material, artificial graphite was used. To an aqueous solution containing carboxymethyl cellulose (hereinafter referred to as "CMC") as a slurry thickening agent, the graphite was added and stirred. After uniform slurry was obtained, a styrene-butadiene copolymer (styrene polymer) was added as a binder. Thereafter, the mixture was further stirred and uniformly applied to both surfaces of the copper collector of 10 μm in thickness such that the capacity per unit area becomes equal, and dried. Thereafter, the mixture was compression molded by a roll press to manufacture a negative electrode (Examples 1 to 20) containing CMC in an amount of 1 mass% and a styrene polymer in an amount of 0.3 to 8.0 mass% based on the total negative electrode active material layer.

The positive electrode was manufactured as follows. As a positive electrode active material, a mixture of $Li(Li_{0.1}Mn_{1.9})O_4$ and $LiNi_{0.84}Co_{0.15}O_2$ in a mass ratio of 85:15 was used. With this, polyvinylidene fluoride was mixed in an amount of 5 mass% as a binder. The resultant mixture was dispersed in N-methyl-2-pyrrolidone to prepare slurry. The slurry was uniformly applied to both surfaces of an aluminium collector of 20 μm in thickness, so as to obtain a thickness of 95 μm, dried and compression molded by a roll press to manufacture the positive electrode.

As the separator, a fine porous polyethylene film of 25 μm in thickness was used. Furthermore, as the electrolyte solvent, a solvent containing a mixture of ethylene carbonate (EC) and diethyl carbonate (DEC) in a volume ratio of 30:70, in which as a lithium salt, 1.0 mol/l of $LiPF_6$ was dissolved, was used. In the electrolytic solution as mentioned above, as an additive, a cyclic sulfonic acid ester represented by compound No. 2 or compound No. 3 was contained in an amount of 0.002 to 5.0 mass%. In this manner, batteries (Examples 1 to 20) were manufactured.

The batteries were manufactured by laminating a positive electrode and a negative electrode via the separator to form a laminate packaged lithium secondary battery. The discharge capacity of the battery thus manufactured was 98 mAh.

(Examples 21 to 40)

Batteries (Examples 21 to 40) were manufactured in the same manner as in Examples 1 to 20 except that a styrene-acryl copolymer (styrene polymer) was used as the binder for negative electrode.

(Comparative Examples 1 to 16)

Batteries (Comparative Examples 1 to 16) were manufactured in the same manner as in Examples 1 to 40 except that 1,3-propane sultone (hereinafter referred to as "PS") was contained in an electrolytic solution as an additive in place of a cyclic sulfonic acid ester.

(Comparative Examples 17 to 24)

Batteries (Comparative Examples 17 to 24) were manufactured in the same manner as in Examples 1 to 20 except that a styrene-butadiene copolymer was contained in an amount of 0.1 mass% or 9.0 mass% as a binder for a negative electrode.

(Comparative Examples 25 to 32)

Batteries (Comparative Examples 25 to 32) were manufactured in the same manner as in Examples 21 to 40 except that a styrene-acryl copolymer was contained in an amount of 0.1 mass% or 9.0 mass% as a binder for a negative electrode.

(Comparative Examples 33 to 40)

Batteries (Comparative Examples 33 to 40) were manufactured in the same manner as in Examples 1 to 20 except that a cyclic sulfonic acid ester was contained in an amount of 0.001 mass% or 6.0 mass% in an electrolytic solution as an electrolyte additive.

(Comparative Examples 41 to 48)

Batteries (Comparative Examples 41 to 48) were manufactured in the same manner as in Examples 21 to 40 except that a cyclic sulfonic acid ester was contained in an amount of 0.001 mass% or 6.0 mass% in an electrolytic solution as an electrolyte additive.

(Charge and discharge cycle test)

Next, the batteries manufactured as mentioned above were subjected to a charge and discharge cycle test in a constant current and constant voltage system under the following conditions.

(1) Charge conditions

Temperature: 60°C
Charge termination voltage: 4.2 V
Charge current: 98 mA
Total charge time: 2.5 hours

(2) Discharge conditions

Temperature: 60°C
Discharge termination voltage: 3.0 V
Discharge current: 98 mA.

Capacity retention rate (%) is a ratio of the discharge capacity (mAh) after 500 cycles relative to the discharge capacity (mAh) after 10 cycles and represented by the following expression.

$$\text{Capacity retention rate (\%)} = \text{(Discharge capacity (mAh) after 500 cycles)} / \text{(Discharge capacity (mAh) after 10 cycles)}$$

The results of the cycle test are shown in Tables 2 to 5.
[Table 2]

[Table 2]

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Example 1 | | 2 | Compound No. 2 | 0.002 | 70 |
| Example 2 | | | | 0.1 | 72 |
| Example 3 | | | | 2 | 79 |
| Example 4 | | | | 4.4 | 75 |
| Example 5 | | | | 5 | 73 |

(continued)

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Example 6 | Styrene-butadiene copolymer | 2 | Compound No. 3 | 0.002 | 71 |
| Example 7 | | | | 0.4 | 73 |
| Example 8 | | | | 1.5 | 79 |
| Example 9 | | | | 2.8 | 75 |
| Example 10 | | | | 5 | 73 |
| Example 11 | | 0.3 | Compound No. 2 | 2 | 71 |
| Example 12 | | 2.5 | | | 73 |
| Example 13 | | 4 | | | 74 |
| Example 14 | | 6 | | | 77 |
| Example 15 | | 8 | | | 73 |
| Example 16 | | 0.3 | Compound No. 3 | 2 | 72 |
| Example 17 | | 0.8 | | | 76 |
| Example 18 | | 1 | | | 78 |
| Example 19 | | 5.5 | | | 71 |
| Example 20 | | 8 | | | 70 |

[Table 3]

[Table 3]

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Example 21 | Styrene-acryl | 2 | Compound No. 2 | 0.002 | 68 |

(continued)

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Example 22 | copolymer | | | 0.1 | 69 |
| Example 23 | | | | 2 | 76 |
| Example 24 | | | | 4.4 | 74 |
| Example 25 | | | | 5 | 72 |
| Example 26 | | 2 | Compound No. 3 | 0.002 | 69 |
| Example 27 | | | | 0.4 | 70 |
| Example 28 | | | | 1.5 | 75 |
| Example 29 | | | | 2.8 | 78 |
| Example 30 | | | | 5 | 73 |
| Example 31 | | 0.3 | Compound No. 2 | 2 | 67 |
| Example 32 | | 2.5 | | | 77 |
| Example 33 | | 4 | | | 76 |
| Example 34 | | 6 | | | 74 |
| Example 35 | | 8 | | | 72 |
| Example 36 | | 0.3 | Compound No. 3 | 2 | 66 |
| Example 37 | | 0.8 | | | 68 |
| Example 38 | | 1 | | | 77 |
| Example 39 | | 5.5 | | | 73 |
| Example 40 | | 8 | | | 72 |

[Table 4]

[Table 4]

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Comparative Example 1 | Styrene-butadiene copolymer | 2 | PS | 1 | 40 |
| Comparative Example 2 | | | | 2 | 46 |
| Comparative Example 3 | | | | 3 | 45 |
| Comparative Example 4 | | | | 5 | 40 |
| Comparative Example 5 | | 3 | | 3 | 45 |
| Comparative Example 6 | | | | 3.5 | 47 |
| Comparative Example 7 | | | | 4 | 43 |
| Comparative Example 8 | | | | 5 | 44 |
| Comparative Example 9 | Styrene-acryl copolymer | 2 | PS | 1 | 38 |
| Comparative Example 10 | | | | 2 | 48 |
| Comparative Example 11 | | | | 3 | 49 |
| Comparative Example 12 | | | | 5 | 42 |
| Comparative Example 13 | | 3 | | 3 | 39 |
| Comparative Example 14 | | | | 3.5 | 47 |
| Comparative Example 15 | | | | 4 | 49 |
| Comparative Example 16 | | | | 5 | 46 |

[Table 5]

[Table 5]

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Comparative Example 17 | Styrene-butadiene copolymer | 0.1 | Compound No. 2 | 0.002 | 41 |
| Comparative Example 18 | | | | 3 | 44 |
| Comparative Example 19 | | | Compound No. 3 | 4 | 43 |
| Comparative Example 20 | | | | 5 | 46 |
| Comparative Example 21 | | 9 | Compound No. 2 | 0.3 | 39 |
| Comparative Example 22 | | | | 3 | 40 |
| Comparative Example 23 | | | Compound No. 3 | 0.4 | 42 |
| Comparative Example 24 | | | | 4 | 41 |
| Comparative Example 25 | Styrene-acryl copolymer | 0.1 | Compound No. 2 | 0.002 | 40 |
| Comparative Example 26 | | | | 3 | 46 |
| Comparative Example 27 | | | Compound No. 3 | 4 | 43 |
| Comparative Example 28 | | | | 5 | 44 |
| Comparative Example 29 | | 9 | Compound No. 2 | 0.3 | 37 |
| Comparative Example 30 | | | | 3 | 42 |
| Comparative Example 31 | | | Compound No. 3 | 0.4 | 42 |
| Comparative Example 32 | | | | 4 | 44 |

(continued)

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Comparative Example 33 | Styrene-butadiene copolymer | 0.3 | Compound No. 2 | 0.001 | 35 |
| Comparative Example 34 | Styrene-butadiene copolymer | 4 | Compound No. 2 | 0.001 | 36 |
| Comparative Example 35 | Styrene-butadiene copolymer | 5 | Compound No. 3 | 0.001 | 36 |
| Comparative Example 36 | Styrene-butadiene copolymer | 8 | Compound No. 3 | 0.001 | 39 |
| Comparative Example 37 | Styrene-butadiene copolymer | 3 | Compound No. 2 | 6 | 33 |
| Comparative Example 38 | Styrene-butadiene copolymer | 4 | Compound No. 2 | 6 | 34 |
| Comparative Example 39 | Styrene-butadiene copolymer | 1 | Compound No. 3 | 6 | 40 |
| Comparative Example 40 | Styrene-butadiene copolymer | 2 | Compound No. 3 | 6 | 39 |
| Comparative Example 41 | Styrene-acryl copolymer | 0.3 | Compound No. 2 | 0.001 | 32 |
| Comparative Example 42 | Styrene-acryl copolymer | 4 | Compound No. 2 | 0.001 | 33 |
| Comparative Example 43 | Styrene-acryl copolymer | 5 | Compound No. 3 | 0.001 | 37 |
| Comparative Example 44 | Styrene-acryl copolymer | 8 | Compound No. 3 | 0.001 | 38 |
| Comparative Example 45 | Styrene-acryl copolymer | 3 | Compound No. 2 | 6 | 39 |
| Comparative Example 46 | Styrene-acryl copolymer | 4 | Compound No. 2 | 6 | 40 |
| Comparative Example 47 | Styrene-acryl copolymer | 1 | Compound No. 3 | 6 | 42 |
| Comparative Example 48 | Styrene-acryl copolymer | 2 | Compound No. 3 | 6 | 42 |

From the results of the charge and discharge cycle test shown in Tables 2 to 5, it was confirmed that a non-aqueous electrolyte secondary batteries (Examples 1 to 40) each containing a styrene polymer in an amount of 0.3 to 8.0 mass% as the binder of the negative electrode in a negative electrode active material layer and at least a cyclic sulfonic acid ester including two sulfonyl groups in an amount of 0.002 to 5.0 mass% in the electrolytic solution, has a high capacity retention rate.

In the cases (Comparative Examples 1 to 16) where PS is contained in an electrolytic solution in place of a cyclic sulfonic acid ester, a capacity retention rate decreased as compared to Examples 1 to 40. This is considered to be because the resistance of the film formed on the interface between a binder and an electrolytic solution is high and thus lithium ions failed to be smoothly transferred.

In the cases (Comparative Examples 17 to 32) where a styrene polymer was contained in an amount of 0.1 mass% or 9.0 mass% as a binder in a negative electrode, a capacity retention rate decreased as compared to Examples

1 to 40. Furthermore, also in the cases (Comparative Examples 33 to 48) where a cyclic sulfonic acid ester was added to an electrolytic solution in an amount of 0.001 mass% or 6.0 mass%, a capacity retention rate decreased as compared to Examples 1 to 40.

In the cases (Comparative Examples 17 to 20, Comparative Examples 25 to 28) where the binder containing a styrene polymer in a negative electrode is 0.1 mass%, it is considered that since the amount of binder in the negative electrode is extremely low, the adhesiveness of the electrode becomes insufficient and a battery capacity cannot be obtained. Furthermore, in the cases (Comparative Examples 21 to 24, Comparative Examples 29 to 32) where the binder containing a styrene polymer is 9.0 mass%, it is considered that the resistance increasing effect of the use of the binder difficult to be impregnated with an electrolytic solution became larger than the resistance decreasing effect of the film formed on the interface between the binder and the electrolytic solution. As a result, it is considered that the battery capacity cannot be sufficiently obtained.

In the cases (Comparative Examples 33 to 36, 41 to 44) where the addition amount of cyclic sulfonic acid ester in an electrolytic solution is 0.001 mass%, it is considered that since the amount of cyclic sulfonic acid ester is extremely low, a film is not sufficiently formed on the surface of the negative electrode active material and thus a side reaction between the negative electrode active material and the electrolytic solution proceeds, decreasing the battery capacity. Furthermore, in the cases (Comparative Examples 37 to 40, 45 to 48) where the addition amount is 6.0 mass%, it is considered that the film on the interface between the binder and the electrolytic solution is excessively thick and thus the solvation/desolvation reaction of lithium ions does not smoothly proceed, and as a result, the resistance of a battery conceivably increases, resulting in decreasing the capacity retention rate.

(Examples 41 to 56)

Batteries (Examples 41 to 56) were manufactured in the same manner as in Examples 1 to 20 except that a methyl methacrylate-styrene-butadiene copolymer or an acrylonitrile-styrene-butadiene copolymer were used as the binder in the negative electrode, and were subjected to the charge and discharge cycle test in the same manner as in Examples 1 to 20. The results are shown in Table 6.
[Table 6]

[Table 6]

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Example 41 | Methyl methacrylate-styrene-butadiene copolymer | 0.4 | Compound No. 2 | 2 | 72 |
| Example 42 | | 0.7 | | | 74 |
| Example 43 | | 3 | | | 79 |
| Example 44 | | 4 | | | 77 |
| Example 45 | | 1 | Compound No. 3 | 2.5 | 79 |
| Example 46 | | 3.7 | | | 78 |
| Example 47 | | 4.5 | | | 75 |
| Example 48 | | 4.9 | | | 72 |

(continued)

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Example 49 | Acrylonitrile-styrene-butadiene copolymer | 0.3 | Compound No. 2 | 3 | 73 |
| Example 50 | | 0.7 | | | 77 |
| Example 51 | | 0.9 | | | 75 |
| Example 52 | | 2 | | | 74 |
| Example 53 | | 4 | Compound No. 3 | 2 | 71 |
| Example 54 | | 4.5 | | | 76 |
| Example 55 | | 5.5 | | | 74 |
| Example 56 | | 7 | | | 73 |

From the results of the charge and discharge cycle test shown in Table 6, it was confirmed that also in the cases (Examples 41 to 56) where another monomer was added to a part of styrene-butadiene copolymer, a high capacity retention rate was shown and the effects of the invention can be exhibited.

(Examples 57 to 72)

Batteries (Examples 57 to 72) were manufactured in the same manner as in Examples 1 to 20 except that an acryl-styrene-acrylonitrile copolymer or a carboxylic acid ester-introduced styrene-acryl copolymer was used as the binder for the negative electrode, and were subjected to the charge and discharge cycle test in the same manner as in Examples 1 to 20. The results are shown in Table 7.
[Table 7]

[Table 7]

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Example 57 | Acryl-styrene-acrylonitrile copolymer | 0.5 | Compound No. 2 | 2 | 70 |
| Example 58 | | 0.6 | | | 73 |
| Example 59 | | 3.1 | | | 81 |
| Example 60 | | 4.2 | | | 78 |
| Example 61 | | 1.2 | Compound No. 3 | 2.5 | 76 |
| Example 62 | | 3.6 | | | 77 |
| Example 63 | | 4.3 | | | 74 |
| Example 64 | | 4.8 | | | 71 |
| Example 65 | Carboxylic acid ester-introduced styrene-acrylonitrile copolymer | 0.3 | Compound No. 2 | 3 | 73 |
| Example 66 | | 0.6 | | | 75 |
| Example 67 | | 1 | | | 76 |
| Example 68 | | 1.9 | | | 76 |
| Example 69 | | 3.9 | Compound No. 3 | 2 | 72 |
| Example 70 | | 4.6 | | | 73 |
| Example 71 | | 5.3 | | | 74 |
| Example 72 | | 6.9 | | | 70 |

From the results of the charge and discharge cycle test shown in Table 7, it was confirmed that as the binder, also in the cases (Examples 57 to 64) where another monomer was added to a part of styrene-acryl copolymer and the cases (Examples 65 to 72) where styrene-acryl copolymer to which another functional group was introduced was used, a high capacity retention rate is shown. As a result, it was confirmed that the effects of the invention can be exhibited also in the cases where another monomer or functional group was introduced to a part of a styrene-acryl copolymer.

(Examples 73 to 84)

Batteries (Examples 73 to 84) were manufactured in the same manner as in Examples 1 to 40 except that a cyclic sulfonic acid ester compound represented by compound No. 4, compound No. 5 or compound No. 6 in Table 1 was contained in an amount of 1 mass% or 3 mass% as an additive for an electrolytic solution.

(Comparative Examples 49 to 60)

Batteries (Comparative Examples 49 to 60) were manufactured in the same manner as in Examples 1 to 40 except that vinylene carbonate (VC) was contained as the electrolyte additive.

The charge and discharge cycle test was performed with respect to Examples 73 to 84 and Comparative Examples 49 to 60 in the same manner as in Examples 1 to 40. The results are shown in Table 8.

[Table 8]

[Table 8]

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Example 73 | Styrene-butadiene copolymer | 2 | Compound No. 4 | 1 | 60 |
| Example 74 | | | | 3 | 62 |
| Example 75 | | | Compound No. 5 | 1 | 63 |
| Example 76 | | | | 3 | 63 |
| Example 77 | | | Compound No. 6 | 1 | 62 |
| Example 78 | | | | 3 | 62 |
| Example 79 | Styrene-acryl copolymer | | Compound No. 4 | 1 | 62 |
| Example 80 | | | | 3 | 64 |
| Example 81 | | | Compound No. 5 | 1 | 63 |
| Example 82 | | | | 3 | 65 |
| Example 83 | | | Compound No. 6 | 1 | 64 |
| Example 84 | | | | 3 | 63 |
| Comparative Example 49 | Styrene-butadiene copolymer | | VC | 0.001 | 51 |
| Comparative Example 50 | | | | 0.1 | 53 |
| Comparative Example 51 | | | | 1 | 55 |
| Comparative Example 52 | | | | 2.2 | 54 |
| Comparative Example 53 | | | | 3.3 | 55 |
| Comparative Example 54 | | | | 4.5 | 54 |
| Comparative Example 55 | Styrene-acryl copolymer | | VC | 0.002 | 49 |
| Comparative Example 56 | | | | 0.11 | 47 |
| Comparative Example 57 | | | | 1.2 | 48 |
| Comparative Example 58 | | | | 2.4 | 52 |
| Comparative Example 59 | | | | 3.3 | 53 |

(continued)

| | Type of binder of negative electrode | Binder content in negative electrode active material layer (mass%) | Type of cyclic sulfonic acid ester in electrolytic solution | Content of cyclic sulfonic acid ester in electrolytic solution (mass%) | Capacity retention rate (%) |
|---|---|---|---|---|---|
| Comparative Example 60 | | | | 4.3 | 51 |

From the results of the charge and discharge cycle test shown in Table 8, also in the cases (Examples 73 to 84) where a cyclic sulfonic acid ester compound represented by compound No. 4, compound No. 5 or compound No. 6 were used as the additive for an electrolytic solution, a satisfactory capacity retention rate was shown. As a result, it was demonstrated that the same effect can be obtained if a cyclic sulfonic acid ester including two sulfonyl groups is used as the additive for an electrolytic solution.

In contrast, in the cases (Comparative Examples 49 to 60) where VC was used as the additive for an electrolytic solution, a satisfactory capacity retention rate was not obtained. This is considered to be because in the cases where VC was used as the additive, a film was formed on the interface between the negative electrode active material and the binder, and thus adhesiveness of the electrode reduced, with the result that inactivation of the active material occurs to decrease the capacity.

(Comparative Examples 61 to 65 and 71 to 75)

Batteries (Comparative Examples 61 to 65 and 71 to 75) were manufactured in the same manner as in Examples 1 to 40 except that ethylene glycol dimethane sulfonate represented by the following formula (2) was contained as the additive for an electrolytic solution.

[Formula 2]

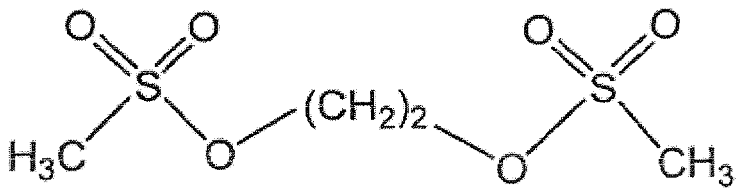

(2)

(Comparative Examples 66 to 70 and 76 to 80)

Batteries (Comparative Examples 66 to 70 and 76 to 80) were manufactured in the same manner as in Examples 1 to 40 except that 1 mass% of benzene and 1,4-butanedioldimethane sulfonate represented by the following formula (3) as the additive were contained in the electrolytic solution.

[Formula 3]

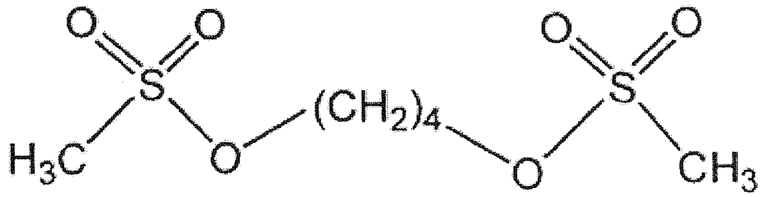

(3)

The charge and discharge cycle test was performed with respect to Comparative Examples 61 to 80 in the same manner as in Examples 1 to 40. The results are shown in Table 9.

[Table 9]

[Table 9]

| | Type of binder of negative electrode | Binder content in negative electrode active material layer (mass%) | Composition of solvent in electrolytic solution | Type of additive in electrolytic solution | Content of additive in electrolytic solution (mass%) | Capacity retention rate (%) |
|---|---|---|---|---|---|---|
| Comparative Example 61 | Styrene-butadiene copolymer | 2 | EC:DEC=30:70 | Compound of Formula (2) | 0.1 | 45 |
| Comparative Example 62 | | | | | 2 | 46 |
| Comparative Example 63 | | | | | 4 | 47 |
| Comparative Example 64 | | | | | 7 | 47 |
| Comparative Example 65 | | | | | 10 | 46 |
| Comparative Example 66 | Styrene-acryl copolymer | | EC:DEC=30:70 Benzene is contained in an amount of 1 mass% | Compound of Formula (3) | 0.1 | 44 |
| Comparative Example 67 | | | | | 3 | 46 |
| Comparative Example 68 | | | | | 6 | 45 |
| Comparative Example 69 | | | | | 8 | 45 |
| Comparative Example 70 | | | | | 10 | 44 |
| Comparative Example 71 | Styrene-butadiene copolymer | | EC:DEC=30:70 | Compound of Formula (2) | 0.1 | 45 |
| Comparative Example 72 | | | | | 2 | 46 |
| Comparative Example 73 | | | | | 4 | 47 |
| Comparative Example 74 | | | | | 7 | 47 |
| Comparative Example 75 | | | | | 10 | 46 |
| Comparative Example 76 | Styrene-acryl copolymer | | EC:DEC=30:70 Benzene is contained in an amount of 1 mass% | Compound of Formula (3) | 0.1 | 44 |
| Comparative Example 77 | | | | | 3 | 46 |
| Comparative Example 78 | | | | | 6 | 45 |
| Comparative Example 79 | | | | | 8 | 45 |
| Comparative Example 80 | | | | | 10 | 44 |

From the results shown in Table 9, in the cases (Comparative Example 61 to 65 and 71 to 75) where ethylene

glycol dimethane sulfonate was contained as the electrolyte additive, a sufficient capacity retention rate was not obtained. This is considered to be because a highly electric conductive film was not obtained on the interface between the binder and the electrolytic solution and further a passive layer having a high electric conductivity was formed on a positive electrode, with the result that the total resistance of a battery increased.

Furthermore, also in the cases (Comparative Examples 66 to 70 and 76 to 80) where 1 mass% of benzene and 1,4-butanedioldimethane sulfonate as the additive were contained in an electrolytic solution, a sufficient capacity retention rate was not obtained.

Furthermore, similarly in the case where benzene was added to an electrolytic solution, a sufficient capacity retention rate was not obtained. This is considered to be because a side reaction occurred between benzene which was added to the electrolytic solution and a binder, and thus the amount of binder reduced, resulting in reducing adhesiveness of the electrode.

From the above results, it was confirmed that a nonaqueous electrolyte secondary battery showing a satisfactory capacity retention rate even if charge and discharge are repeated under a high temperature environment for a long time can be provided by the present invention.

Explanation of Reference

- 11 Positive electrode collector
- 12 Positive electrode active material layer
- 13 Negative electrode collector
- 14 Negative electrode active material layer
- 15 Electrolytic solution
- 16 Separator

## Claims

1. A nonaqueous electrolyte secondary battery comprising
a positive electrode capable of absorbing and desorbing a lithium ion;
a negative electrode comprising a negative electrode active material layer containing at least a styrene polymer as a binder and capable of absorbing and desorbing the lithium ion, a content of the styrene polymer being 0.3 to 8.0 mass% based on a total mass of the negative electrode active material layer;
a nonaqueous electrolytic solution containing at least a cyclic sulfonic acid ester including two sulfonyl groups in an amount of 0.002 to 5.0 mass% based on a total mass of the nonaqueous electrolytic solution; and
a separator provided between the positive electrode and the negative electrode.

2. The nonaqueous electrolyte secondary battery according to claim 1,
wherein the cyclic sulfonic acid ester comprises a compound represented by a following formula (1):

[Formula 1]

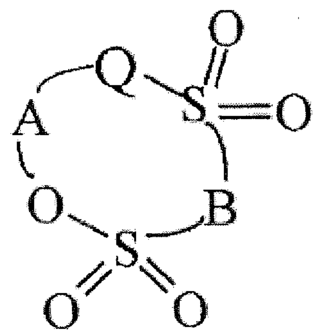

(1)

wherein, in the formula (1), Q represents an oxygen atom, a methylene group or a single bond; A represents an alkylene group having 1 to 5 carbon atoms, a carbonyl group, a sulfinyl group, a fluoroalkylene group having 1 to 6 carbon atoms, or a divalent group having 2 to 6 carbon atoms to which an alkylene unit or a fluoroalkylene unit is

bonded via an ether bond; and B is an alkylene group, a difluoroalkylene group or an oxygen atom.

3. The nonaqueous electrolyte secondary battery according to claim 1 or 2,
wherein the binder of the negative electrode comprises a styrene-butadiene copolymer.

4. The nonaqueous electrolyte secondary battery according to claim 1 or 2, wherein the binder of the negative electrode comprises a styrene-acryl copolymer.

5. The nonaqueous electrolyte secondary battery according to any one of claims 1 to 4, wherein the negative electrode comprises a carbonaceous material as an active material.

6. The nonaqueous electrolyte secondary battery according to claim 5,
wherein the carbonaceous material is a graphite material.

## Patentansprüche

1. Sekundärbatterie mit nichtwässrigem Elektrolyten mit
einer positiven Elektrode, die Lithiumionen absorbieren und desorbieren kann; einer negativen Elektrode, die eine Negativelektroden-Aktivmaterialschicht mit mindestens einem Styrol-Polymer als Binder aufweist und das Lithiumion absorbieren und desorbieren kann, wobei der Gehalt des Styrol-Polymers 0,3 bis 8,0 Masse-% basierend auf einer Gesamtmasse der Negativelektroden-Aktivmaterialschicht ist; einer nichtwässrigen elektrolytischen Lösung, die mindestens einen zyklischen Sulfonsäureester mit zwei Sulfonylgruppen in einer Menge von 0,002 bis 5,0 Masse-% basierend auf der Gesamtmasse der nichtwässrigen elektrolytischen Lösung aufweist;
und
einem Separator, der zwischen der positiven Elektrode und der negativen Elektrode vorgesehen ist.

2. Sekundärbatterie mit nichtwässrigem Elektrolyten nach Anspruch 1,
wobei der zyklische Sulfonsäureester eine Verbindung aufweist, die durch die folgende Formel (1) dargestellt wird:

[Formel 1]

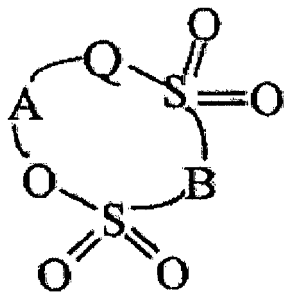

(1)

wobei in der Formel (1) Q ein Sauerstoffatom, eine Methylengruppe oder eine Einfachbindung darstellt; A eine Alkylengruppe mit 1 bis 5 Kohlenstoffatomen, eine Carbonylgruppe, eine Sulfinylgruppe, eine Fluoralkylengruppe mit 1 bis 6 Kohlenstoffatomen, oder eine divalente Gruppe mit 2 bis 6 Kohlenstoffatomen, an die eine Alkyleneinheit oder ein Fluoralkyleneinheit durch eine Etherbindung gebunden ist darstellt; und B eine Alkylengruppe, eine Difluoralkylengruppe oder ein Sauerstoffatom ist.

3. Sekundärbatterie mit nichtwässrigem Elektrolyten nach Anspruch 1 oder 2, wobei das Bindemittel der negativen Elektrode ein Styrolbutadien-Copolymer aufweist.

4. Sekundärbatterie mit nichtwässrigem Elektrolyten nach Anspruch 1 oder 2, wobei das Bindemittel der negativen Elektrode ein Styrolacryl-Copolymer aufweist.

5. Sekundärbatterie mit nichtwässrigem Elektrolyten nach einem der Ansprüche 1 bis 4, wobei die negative Elektrode ein kohlenstoffhaltiges Material als aktives Material aufweist.

6. Sekundärbatterie mit nichtwässrigem Elektrolyten nach Anspruch 5, wobei das kohlenstoffhaltige Material ein Graphitmaterial ist.

## Revendications

1. Batterie secondaire à électrolyte non aqueux comprenant
une électrode positive capable d'absorber et de désorber un ion lithium ;
une électrode négative comprenant une couche de matériau actif d'électrode négative contenant au moins un polymère de styrène comme liant et capable d'absorber et de désorber l'ion lithium, une teneur du polymère de styrène étant de 0,3 à 8,0 % en masse par rapport à une masse totale de la couche de matériau actif d'électrode négative ;
une solution électrolytique non aqueuse contenant au moins un ester d'acide sulfonique cyclique incluant deux groupes sulfonyle selon une quantité de 0,002 à 5,0 % en masse par rapport à une masse totale de la solution électrolytique non aqueuse ; et
un séparateur ménagé entre l'électrode positive et l'électrode négative.

2. Batterie secondaire à électrolyte non aqueux selon la revendication 1,
dans laquelle l'ester d'acide sulfonique cyclique comprend un composé représenté par la formule (1) suivante :

[Formule 1]

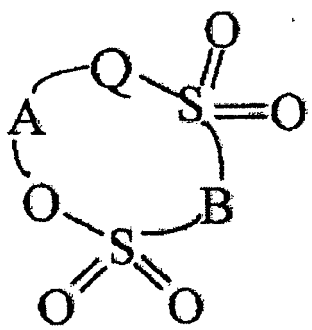

(1)

dans laquelle,
dans la formule (I), Q représente un atome d'oxygène, un groupe méthylène ou une simple liaison ; A représente un groupe alkylène comportant de 1 à 5 atomes de carbone, un groupe carbonyle, un groupe sulfinyle, un groupe fluoroalkylène comportant de 1 à 6 atomes de carbone, ou un groupe divalent comportant de 2 à 6 atomes de carbone auquel un motif alkylène ou un motif fluoroalkylène est lié via une liaison éther ; et B est un groupe alkylène, un groupe difluoroalkylène ou un atome d'oxygène.

3. Batterie secondaire à électrolyte non aqueux selon la revendication 1 ou 2,
dans laquelle le liant de l'électrode négative comprend un copolymère de styrène-butadiène.

4. Batterie secondaire à électrolyte non aqueux selon la revendication 1 ou 2,
dans laquelle le liant de l'électrode négative comprend un copolymère de styrène-acryle.

5. Batterie secondaire à électrolyte non aqueux selon l'une quelconque des revendications 1 à 4,
dans laquelle l'électrode négative comprend un matériau carboné en tant que matériau actif.

6. Batterie secondaire à électrolyte non aqueux selon la revendication 5,
dans laquelle la substance carbonée est un matériau graphite.

[FIG. 1]

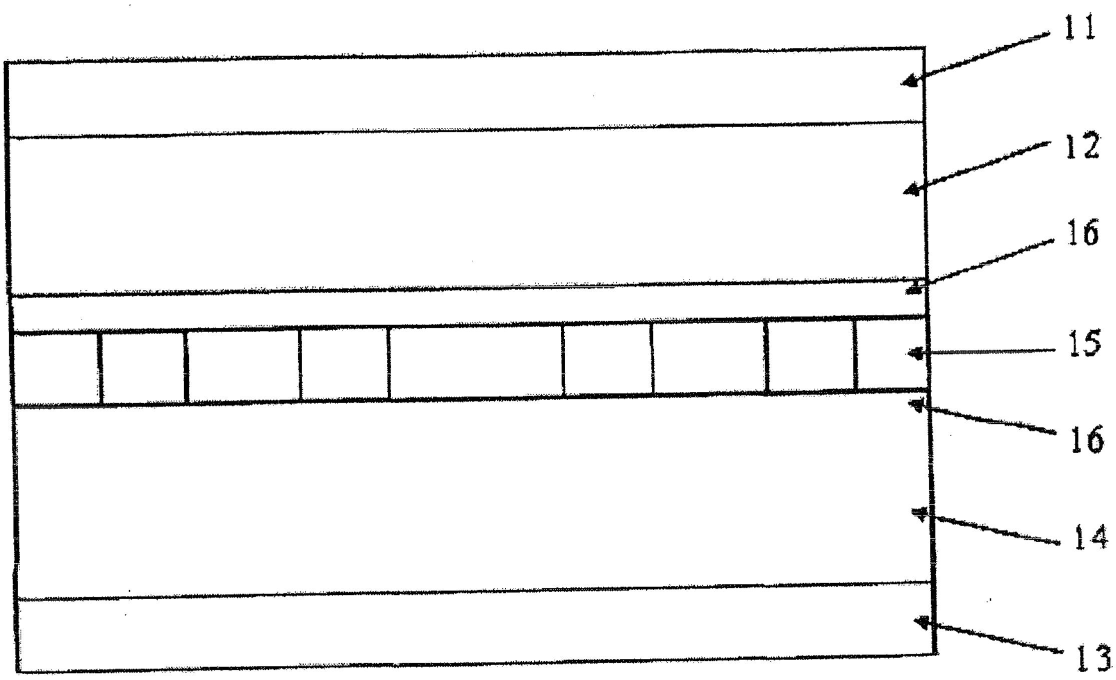

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3978881 B
- JP 3059832 B
- JP 3815087 B
- JP 4229615 B
- JP 2548460 B
- US 2006166096 A1
- KR 20080018732 A
- JP 2009038018 A
- JP 11111300 A
- JP 4033074 B
- US 4950768 A
- JP 5004496 B
- DE 2509738
- DE 2233859